# EUROPÄISCHE PATENTSCHRIFT

(11) **EP 2 096 009 B1**
(45) Veröffentlichungstag und Bekanntmachung des Hinweises auf die Patenterteilung: **20.07.2011**
(21) Anmeldenummer: 09153199.6
(22) Anmeldetag: 19.02.2009
(51) Int. Cl.: B60T 11/236, F16J 15/16

(54) **Druckmittelzylinder für ein hydraulisches Betätigungssystem eines Kraftfahrzeuges**
Pressure cylinder for a hydraulic actuation system in a motor vehicle
Cylindre de moyen d'impression pour un système d'actionnement hydraulique d'un véhicule automobile

(30) Priorität: 26.02.2008 DE 102008011132
(43) Veröffentlichungstag der Anmeldung: 02.09.2009
(73) Patentinhaber: ZF Friedrichshafen AG, 88038 Friedrichshafen (DE)
(72) Erfinder: Baumgart, Sebastian, 97072 Würzburg (DE); Rieß, Thomas, 97437 Haßfurt (DE)

(56) Entgegenhaltungen:
- EP-A1- 1 873 425
- DE-B4- 19 680 491
- US-A- 3 166 908
- US-A1- 2005 268 608

## Beschreibung

Die Erfindung betrifft einen Druckmittelzylinder für ein hydraulisches Betätigungssystem eines Kraftfahrzeuges. Ein gemäß dem Oberbegriff des Patentanspruchs 1 definierter Druckmittelzylinder wird üblicherweise als Nehmerzylinder und ein gemäß dem Oberbegriff des Patentanspruchs 2 definierter Druckmittelzylinder wird üblicherweise als Geberzylinder für ein hydraulisches Kupplungs- oder Bremssystem eines Kraftfahrzeuges eingesetzt. Solche Druckmittelzylinder sind beispielsweise aus der DE 103 52 941 A1 bzw. der EP 1 602 544 A1 bekannt.

In der DE 196 80 491 B4 wird ein weiterer gattungsgemäßer Geberzylinder beschrieben, bei dem die Primärdichtung zur Abdichtung des Druckraumes, ein Abstandselement und eine von diesem axial zur Primärdichtung beabstandete Sekundärdichtung zur Abdichtung eines Nachlaufraumes als gemeinsame Baueinheit ausgeführt sind. Dazu können diese Dichtungen axial beabstandet werkstoffschlüssig mit dem Abstandselement verbunden sein, oder gemeinsam als ein einziges Elastomerteil gefertigt sein, welches mit dem Abstandselement stoffschlüssig verbunden ist oder dieses bereits selbst mit ausbildet.

Aus US 2005/0268608 A1 ist ein hydraulischer Zylinder bekannt mit einem Gehäuse für einen Kolben der durch eine erste Dichtung im Gehäuse abgedichtet ist.

Es ist ersichtlich, dass das Dichtungssystem derartiger Druckmittelzylinder zur Abdichtung des Druckraumes und bei einem Geberzylinder zusätzlich eines Nachlaufraumes gegenüber der Umgebung eine Mehrzahl von Bauteilen erfordert, welche einen beträchtlichen Montageaufwand zur Folge haben, wobei auch das Risiko einer Fehlmontage durch fehlerhaft eingelegte Bauteile existiert. Auch bei dem mit der DE 196 80 491 B4 offenbarten Dichtungsanordnung eines Druckmittelzylinders ist eine Fehlmontage infolge eines um 180° gedrehten Dichtungspakets nicht auszuschließen.

Von dieser Problematik ausgehend, stellt sich die Erfindung die Aufgabe, Druckmittelzylinder mit einem vereinfachten und montagesicheren Aufbau bereitzustellen.

Diese Aufgabe wird bei den Druckmittelzylindern der eingangs genannten Art durch die im Kennzeichen der Patentansprüche 1 und 2 genannten Merkmale gelöst.

Es wird somit ein erster Druckmittelzylinder für ein hydraulisches Betätigungssystem eines Kraftfahrzeuges vorgeschlagen, welcher ein Gehäuse mit einem Innenzylinder und mit einem Druckanschluss umfasst und weiter eine mit dem Gehäuse fest verbundene Führungshülse, die mit dem Innenzylinder des Gehäuses eine gemeinsame Laufbuchse ausbildet und einen in der Laufbuchse verschiebbar angeordneten Kolben, der einen variablen Druckraum begrenzt. Zur Abdichtung des Druckraumes dient eine gehäusefeste erste Dichtung, die mit dem Kolben und mit dem Gehäuse oder mit einem mit dem Gehäuse fest verbundenen Bauteil zusammenwirkt. Der Druckmittelzylinder zeichnet sich erfindungsgemäß dadurch aus, dass die erste Dichtung stoffschlüssig mit der Führungshülse ausgeführt ist.

Die stoffschlüssige Verbindung von Führungshülse und der aus einem Elastomerwerkstoff gefertigten Dichtung erfolgt vor der Montage des Druckmittelzylinders z.B. mittels Verkleben, Anvulkanisieren oder durch Anspritzen eines Elastomers an die Führungshülse. Auf diese Weise wird die Teileanzahl eines Druckmittelzylinders reduziert und ein diesbezüglicher Montagefehler ausgeschlossen.

Es wird weiterhin ein zweiter Druckmittelzylinder für ein hydraulisches Betätigungssystem eines Kraftfahrzeuges vorgeschlagen, welcher ein Gehäuse mit einem Innenzylinder und mit einem Druckanschluss umfasst, weiter eine mit dem Gehäuse fest verbundene Führungshülse, die mit dem Innenzylinder des Gehäuses eine gemeinsame Laufbuchse ausbildet und einen in der Laufbuchse verschiebbar angeordneten Kolben, der einen variablen Druckraum begrenzt. Zur Abdichtung des Druckraumes dient eine gehäusefeste erste Dichtung, die mit dem Kolben und mit dem Gehäuse oder mit einem mit dem Gehäuse fest verbundenen Bauteil zusammenwirkt. Zusätzlich umfasst der Druckmittelzylinder eine zwischen dem Kolben und dem Gehäuse wirkende zweite gehäusefeste Dichtung, die von der ersten Dichtung durch ein Abstandselement axial beabstandet angeordnet ist. Der Druckmittelzylinder ist dadurch gekennzeichnet, dass das Abstandselement als Bestandteil der Führungshülse ausgeführt ist.

Das Abstandselement kann beispielsweise als ringförmiger Axialfortsatz der Führungshülse oder in Form segmentierter Axialvorsprünge ausgebildet sein. Für die Verwendung als Geberzylinder können dabei vorteilhaft durch entsprechende Aussparungen Fluidkanäle zum Nachströmen von Fluid aus einem mit dem Druckmittelzylinder verbundenen Vorratsbehälter und zur möglichst flächigen Umströmung bzw. Benetzung des Kolbens vorgesehen sein.

Durch die vorgeschlagene Ausgestaltung wird die Anzahl der für einen Druckmittelzylinder zu montierenden Bauteile reduziert. Mit einer einteiligen Gestaltung von Führungshülse und Abstandselement entfallen damit auch gleichzeitig Montagefehler durch eine fehlerhafte gegenseitige Lage und Positionierungenauigkeiten der vormals separat vorliegenden Teile.

Die Primär- und die Sekundärdichtung können als Einzeldichtungen bereits vor der Montage im Gehäuse des Druckmittelzylinders an der um das Abstandselement verlängerten Führungshülse angeordnet werden. Dazu können an der Führungshülse zwei axial beabstandete und radial gestaffelte Aufnahmeabschnitte zur Anordnung der Primär- und der Sekundärdichtung vorgesehen sein. Zum Beispiel kann der Aufnahmeabschnitt der Primärdichtung an dem freien Ende des Abstandselementes vorgesehen sein, wohingegen zur Anordnung der Sekundärdichtung ein zum Abstandselement radial innenliegender und axial kürzerer Aufnahmeabschnitt vorgesehen ist. Beim Zusammenführen dieser Baueinheit mit dem Zylindergehäuse und dem Kolben ist das Risiko eines unentdeckten Montagefehlers infolge einer falsch eingelegten Dichtung merklich reduziert, da die gesamte Dichtungsanordnung bereits vor deren Einbau auf Mängel geprüft werden kann.

Vorteilhafte Ausgestaltungen und Weiterbildungen der Erfindung sind durch die Merkmale der abhängigen Ansprüche angegeben.

Gemäß einer vorteilhaften Weiterbildung ist vorgesehen, an dem Abstandselement einen Führungsabschnitt für den Kolben auszubilden. Damit kann die Führung des Kolbens über einen größeren Abschnitt erfolgen. Die einteilige Ausgestaltung ermöglicht hierbei eine exakte, in axialer Richtung lediglich von der Primär- und Sekundärdichtung unterbrochene Führungsfläche für den Kolben.

Gemäß einer besonders bevorzugten Variante ist vorgesehen, dass zumindest eine von Primär- und Sekundärdichtung stoffschlüssig mit der Führungshülse ausgeführt ist, beispielsweise mittels einer Verklebung, durch Anvulkanisieren oder durch Anspritzen eines Elastomers an die Führungshülse bzw. an das Abstandselement. Wenn sowohl die Primär- als auch die Sekundärdichtung stoffschlüssig mit der Führungshülse verbunden sind, wird somit eine komplette Dichtungskartusche zum unmittelbaren Einbau in das Zylindergehäuse bereitgestellt, wodurch das Handling einzelner Dichtungen entfällt und die Montage eines Druckmittelzylinders noch weiter vereinfacht wird.

Alternativ dazu können die erste und die zweite Dichtung auch als gemeinsamer Verbund zur Montage an der Führungshülse ausgeführt werden, sodass anstelle von bisher zwei Einzeldichtungen ein einziges, die Primär- und die Sekundärdichtung umfassendes Dichtungspaket vorliegt. Beim Montagevorgang selbst erweist es sich als günstig, zunächst den Kolben durch die Führungshülse durchzuführen, dann das Dichtungspaket zunächst auf den Kolben und weiter auf das an der Führungshülse angeformte Abstandselement zu schieben.

Bei einem mit einer Führungshülse ausgeführten Druckmittelzylinder ist üblicherweise zwischen dem Gehäuse und der Führungshülse eine weitere, dritte gehäusefeste Dichtung vorgesehen, welche z.B. wie in der EP 1 602 544 A1 separat ausgeführt ist. Bei dieser Variante ist es von Vorteil, die dritte Dichtung stoffschlüssig mit der Führungshülse z.B. mittels Anspritzen auszuführen, so dass sich eine separate Dichtung erübrigen kann.

Gemäß einer besonders bevorzugten Ausgestaltung wird die dritte Dichtung in Baueinheit mit der ersten Dichtung ausgeführt, wobei bei einer Ringlippendichtung die radial außen liegende Dichtlippe bzw. der dort befindliche Dichtungsabschnitt ggf. mit einer zusätzlichen Dichtwulst am Zylindergehäuse ausgeführt werden kann und wobei die radial innenliegende Dichtlippe am Kolben und der die Dichtlippen verbindende Basisabschnitt an der Führungshülse anliegen kann.

Nachfolgend wird die Erfindung mit Bezug auf die anliegenden Figuren beispielhaft beschrieben.

Es zeigen:
- Fig. 1: einen Nehmerzylinder bekannter Bauart;
- Fig. 2: einen Geberzylinder bekannter Bauart;
- Fig. 3a-c: eine gemäß der vorliegenden Erfindung gestaltete Führungshülse mit ei- nem daran ausgeführten segmentierten Abstandselement und einem ange- spritzten Dichtungselement zum Einbau in den Geberzylinder nach Fig. 2;
- Fig. 4a-c: eine gemäß der vorliegenden Erfindung gestaltete Führungshülse mit ei- nem daran ausgeführten segmentierten Abstandselement und einem sepa- raten Dichtungselement zum Einbau in den Geberzylinder nach Fig. 2;
- Fig. 5a-c: ein Abstandselement mit einem angespritzten Dichtungselement zum Ein- bau in den Geberzylinder nach Fig. 2.

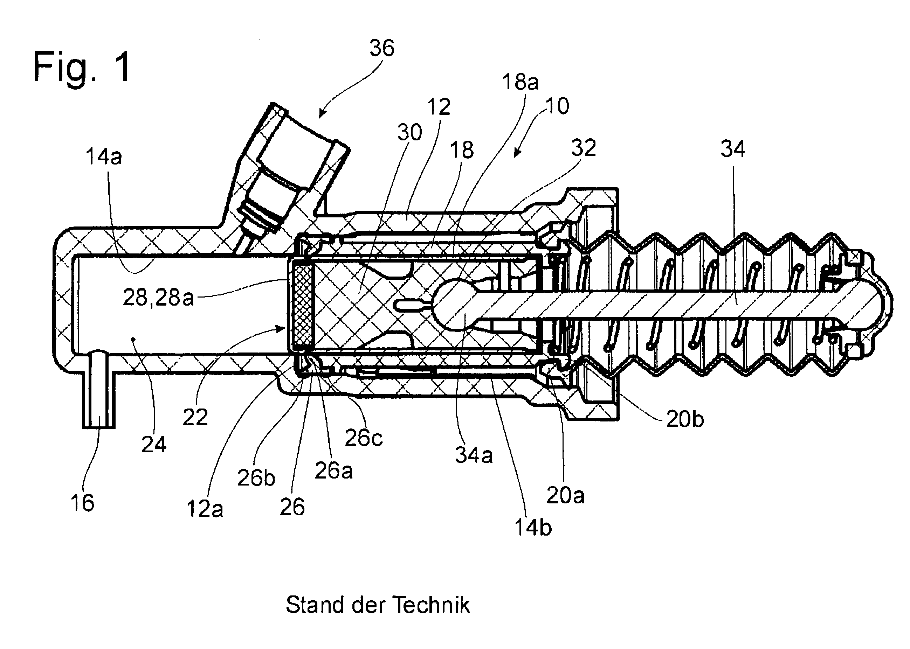

Fig. 1 zeigt einen an sich bekannten, als Nehmerzylinder ausgebildeten Druckmittelzylinder 10 für ein hydraulisches Betätigungssystem eines Kraftfahrzeuges. Der Nehmerzylinder 10 umfasst ein Kunststoffgehäuse 12 mit einer Stufenbohrung, welche einen vorderen Abschnitt 14a und einen hinteren Abschnitt 14b aufweist und wobei an dem Gehäuse 12 ein Druckanschluss 16 zur Verbindung mit einem hydraulischen Geberzylinder ausgebildet ist. In dem hinteren Abschnitt 14b der Stufenbohrung ist eine mit einer Durchgangsbohrung 18a gefertigte Führungshülse 18 bis zum gegenseitigen Eingriff von an dieser und dem Gehäuse 12 ausgebildeten hakenförmigen Anschlagelementen 20a, b eingeführt und fest verrastet, wobei im zusammengebauten Zustand die beiden Innenzylinder der Bohrungen 14a, 18a eine gemeinsame innere Laufbuchse für einen darin verschiebbar angeordneten Kolben 22 ausbilden. Somit ergibt sich innerhalb des Nehmerzylinders 10 ein von dem Kolben 22 und von der Innenwandung des Gehäuses 12 begrenzter variabler Druckraum 24.

Zur Abdichtung des Druckraumes 24 gegenüber der Umgebung dient eine an einem Absatz 12a des Gehäuses 12 im Bereich der Durchmesserstufe angeordnete Ringlippendichtung 26, die mit einer radial inneren Dichtlippe 26a am Kolben 22 und mit einer radial äußeren Dichtlippe 26b an Gehäuse 12 anliegt. Ein, beide Dichtlippen 26b verbindender Basisbereich 26c liegt an der Führungshülse 18 an, so dass auch ein zwischen dem Gehäuse 12 und der Führungshülse 18 verbleibender Ringspalt gegenüber dem Druckraum 24 sicher abgedichtet ist.

Der Kolben 22 weist eine als Tiefziehteil ausgebildete, einseitig mit einem Boden 28a ausgeführte metallische Kolbenschafthülse 28 auf, von der ein aus Kunststoff gefertigtes Einsatzteil 30 aufgenommen ist. Mit dem Kolben 22 ist über eine als Kugelpfanne 32 an dem Einsatzteil 30 ausgeführte Aufnahmeanordnung schwenkbeweglich eine Kolbenstange 34 mit einer Kugelkalotte 34a verbunden, welche mit einer nicht dargestellten Kupplungsgabel oder dergleichen und weiteren Ausrückmitteln einer Fahrzeugkupplung in Wirkverbindung gebracht werden kann. Der Nehmerzylinder 10 weist weiterhin einen seitlich an dessen Gehäuse 12 angeordneten Flansch 36 zur Aufnahme eines zeichnerisch nicht dargestellten Entlüftungsventils auf.

Gemäß der vorliegenden Erfindung ist vorgesehen, bei dem in Fig. 1 dargestellten Druckmittelzylinder 10, die Ringlippendichtung 26 stoffschlüssig durch Anspritzen eines Elastomermaterials mit der Führungshülse 18 auszuführen. Das auf diese Weise geschaffene Verbundbauteil 18, 26 ersetzt damit die separate Ringlippendichtung 26 und die separate Führungshülse 18, wobei der Druckmittelzylinder 10 ansonsten unverändert beibehalten werden kann.

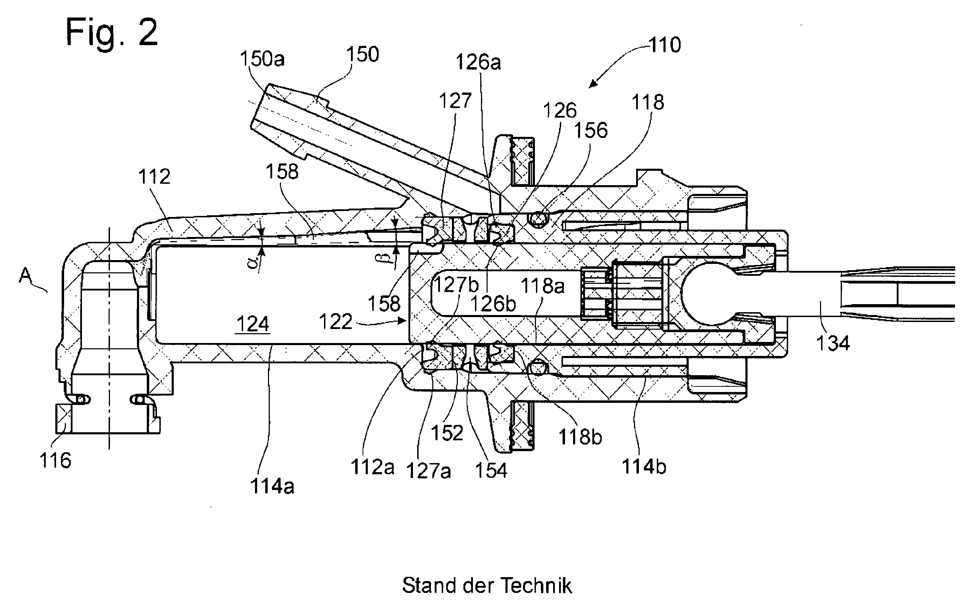

Die Fig. 2 zeigt eine Axialschnittdarstellung eines weiteren bekannten Druckmittelzylinders 110 mit einer Nachlaufeinrichtung, welcher hier als Geberzylinder für eine hydraulische Betätigungseinrichtung zur Betätigung einer Kraftfahrzeugkupplung ausgebildet ist. Der Geberzylinder 110 umfasst wie der in Fig. 1 gezeigte Nehmerzylinder 10 ein Kunststoffgehäuse 112 mit einer einen vorderen Abschnitt 114a und einen hinteren Abschnitt 114b aufweisenden Stufenbohrung und mit einem Druckanschluss 116 zur Verbindung mit einem hydraulischen Nehmerzylinder. In den hinteren Abschnitt 114b der Stufenbohrung ist eine mit einer Durchgangsbohrung 118a gefertigte Führungshülse 118 bis zum Eingriff einer an dieser und dem Gehäuse 112 ausgebildeten, hier zeichnerisch nicht sichtbaren Rastmitteln eingeführt und verbunden, so dass diese axial in beiden Richtungen am Gehäuse 112 festgelegt ist. Im zusammengebauten Zustand bilden die beiden Innenzylinder der Bohrungen 114a, 118a eine gemeinsame innere Laufbuchse für einen darin verschiebbar angeordneten Kolben 122 aus. Somit ergibt sich innerhalb des Geberzylinders 110 ein von dem Kolben 122 und von der Innenwandung des Gehäuses 112 begrenzter variabler Druckraum 124.

Der Kolben 122 des Geberzylinders 110 steht über eine schwenkbeweglich an diesem angeordnete Kolbenstange 134 mit einem nicht dargestellten Kupplungspedal in Wirkverbindung, bei dessen Betätigung sich der Kolben 122 in der Figur nach links verschiebt und über die Fluidverbindung den Nehmerzylinder und eine mit diesen verbundene Kupplungsgabel zum Ausrücken der Fahrzeugkupplung steuert. Von der Mantelfläche des Gehäuses 112 steht ein Nachlaufanschluss 150 ab, der mit einem darin ausgeführten Nachlaufkanal 150a mit einem hier zeichnerisch nicht dargestellten Fluid-Nachlaufbehälter kommunizieren kann.

Zur Abdichtung des Druckraumes 124 und eines Nachlaufraumes sind am Gehäuse zwei, durch ein als Zwischenring 152 ausgeführtes Abstandselement beabstandete Ringlippendichtungen 126, 127 angeordnet, die jeweils mit einer äußeren Dichtlippe 126a, 127a an der Führungshülse 118 bzw. am Gehäuse 112 und mit einer zweiten inneren Dichtlippe 126b, 127b an der Lauffläche des Kolbens 122 anliegen. Die an einem Gehäuseabsatz 112a anliegende Primärdichtung 127 dichtet den Druckraum 124 gegenüber dem durch den Zwischenring 152 gebildeten Nachlaufraum 154 ab. Die am Ende des Führungsrohres 118 in eine Stufe 118b eingesetzte Sekundärdichtung 126 dient der dichten Abtrennung des Nachlaufraumes 154 von der Atmosphäre. Alternativ kann die Sekundärdichtung 126 auch unmittelbar im Gehäuse 112 angeordnet werden und zudem gleichfalls am Kolben 122 und am Führungsrohr 118 anliegen. Das Abstandselement 152 liegt bis auf darin vorgesehene Fluidkanäle am Kolben an, so dass auch in diesem Abschnitt eine sichere Führung des Kolbens 122 gewährleistet ist. Zwischen der Führungshülse 118 und dem Gehäuse 112 ist zur Abdichtung des Nachlaufraumes 154 ein weiteres, als O-Ringdichtung gefertigtes Dichtelement 156 eingesetzt.

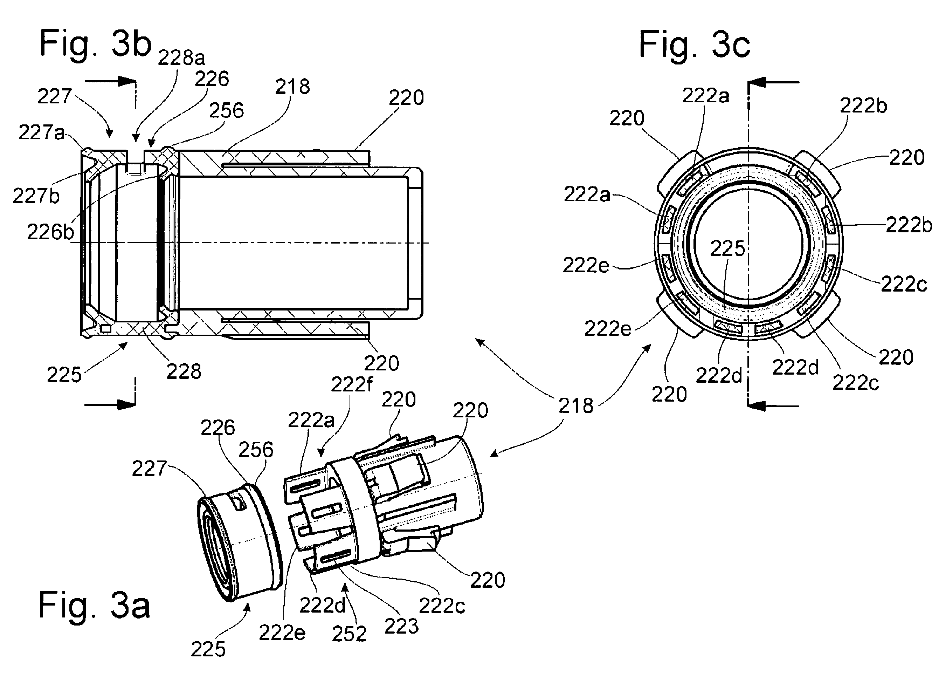

Um ein Nachlaufen von Hydraulikflüssigkeit in den und das Entweichen von Gasblasen aus dem Druckraum 124 sicherzustellen, sind an der Kolbenlauffläche Nachlaufmittel in Form einer sich von dessen Stirnseite aus in axialer Richtung erstreckenden offenen Ausgleichs- bzw. Nachlaufnuten 158 angeordnet. Die Erstreckung ist so gewählt, dass die Primärdichtung 127 in der dargestellten Endstellung des Kolbens 122 überbrückt wird und ein Ausgleichskanal vom Druckraum 124 ausgehend über die Nachlaufnuten 158 zum Nachlaufraum 154 und weiter zum Nachlaufkanal 150a freigegeben wird. Die Fluidverbindung zwischen dem Nachlaufraum 154 und dem Nachlaufkanal 150a sowie dem Druckraum 124 wird durch in der Fig. 3 verdeckte axiale Kanäle im Zwischenring bzw. Abstandselement 152 sichergestellt. Bei einer Bewegung des Kolbens 122 in die den Druckraum 124 verkleinernde Richtung wird die Nachlaufnut 158 aus dem Bereich der Primärdichtung 127 herausbewegt, wodurch sich die Primärdichtung 127 vollständig an die Kolbenlauffläche anlegt und damit die Verbindung zwischen dem Druckraum 124 und dem Nachlaufkanal 150a unterbricht. Anstelle einer offen Nut 158 können die Nachlaufmittel auch an der gezeigten Position als geschlossene Nut, d.h. im wesentlichen als Axialbohrung ausgeführt werden, welche mit einer nach radial außen geführten seitlichen Bohrung, d.h. einem Stichkanal verbunden ist. Der Stichkanal mündet dann in der in Fig. 2 gezeigten Kolbenstellung unmittelbar hinter der mit dem Kolben 122 zusammenwirkenden Dichtlippe 127b der Primärdichtung 127 in den Nachlaufraum 154. In der oberen Wandung des Druckraums 124 ist zur Unterstützung der Entlüftung eine sich in Richtung der Primärdichtung 127 ansteigende Entlüftungsnut 158 angeordnet.

Anhand der weiteren Figuren wird nachfolgend auf der Basis des mit Fig. 2 dargestellten Druckmittelzylinders erläutert, wie die dort separat ausgeführten Ringlippendichtungen 126, 127, die O-Ringdichtung 156, das Abstandselement 152 und die Führungshülse 118 zur Vereinfachung des Aufbaus modifiziert werden können, wobei alle anderen Bauteile des Druckmittelzylinders 110 von deren grundlegenden Gestaltung unverändert übernommen werden können.

Fig. 3 zeigt eine Führungshülse 218, die mittels Rasthaken 220 fest mit dem Gehäuse 112 verbunden werden kann. Zu diesem Zweck können die Rasthaken 220 in dazu korrespondierend am Zylindergehäuse des Druckmittelzylinders nach Fig. 2 ausgebildete, dort jedoch zeichnerisch nicht dargestellte Fenster eingreifen. An dem zum Druckraum 124 ausgerichteten Ende sind im radial äußeren Bereich mehrere, am Umfang beabstandete Axialvorsprünge 222a-e ausgebildet, welche als Abstandselement 252 zur Beabstandung von Primär- 127 und Sekundärdichtung 126 wirken. Es ist erkennbar, dass der Abstand zwischen den in der Fig. 3 oben befindlichen Axialvorsprüngen 222a, b gegenüber den weiteren Abständen vergrößert ausgeführt ist, wodurch eine Aussparung 222f gebildet wird.

Das in Verlängerung der Axialvorsprünge 222a-e dargestellte Dichtungspaket 225 umfasst eine Primär- 227, eine Sekundärdichtung 226 und einen an letzterer ausgebildeten Dichtwulst 256, der die Funktion der Ringdichtung 156 gemäß Fig. 2 übernimmt. Das Dichtungspaket 225 wird durch Anspritzen eines Elastomers, z.B. EPDM, an die Führungshülse 218, insbesondere im Bereich der dort vorgesehenen Axialvorsprünge 222a-e erzeugt. In Fig. 3 wurde das Dichtungspaket 225 lediglich zur besseren Veranschaulichung separat von der Führungshülse 218 dargestellt. Beim Spritzvorgang werden die Axialvorsprünge 222a-e zur Bildung eines zusammenhängenden Elastomerteils radial beidseitig umspritzt, wobei das Elastomer langlochfömige Ausnehmungen 223 an den Axialvorsprüngen 222a-e durchdringt.

Die auf diese Weise erzeugte Baueinheit 218, 225 ist in Fig. 3b in einem Längs- und in Fig. 3c in einem Querschnitt abgebildet. Der angespritzte Elastomerkörper 225 umfasst einen Primärdichtungsbereich 227 mit einer radial äußeren Dichtlippe 227a und einer inneren radial Dichtlippe 227b und des Weiteren einen Sekundärdichtungsbereich 226 mit einer Außenwulst 256 und einer inneren Dichtlippe 226b. Die vormals äußere Dichtlippe 126a der Dichtung 126 in Fig. 2 ist zu einem Rohrabschnitt 228 verlängert und bildet damit den Basisabschnitt der Primärdichtung 227. Der Rohrabschnitt 228 weist über einen Umfangsbereich eine etwa schlitzförmige Ausnehmung 228a auf, welche mit der Aussparung 222f an der Führungshülse 218 zusammenfällt bzw. dort angeordnet ist. Die Ausnehmung 228a ist somit Teil des Nachlaufraumes für in den Druckmittelzylinder nachlaufendes Fluid.

Zur Führung des Kolbens im Bereich des Abstandselements 252 können zusätzlich an diesem radial nach innen gerichtete Abschnitte, die auf einem gemeinsamen Teilkreis mit dem Durchmesser der Laufbuchse enden, vorgesehen werden.

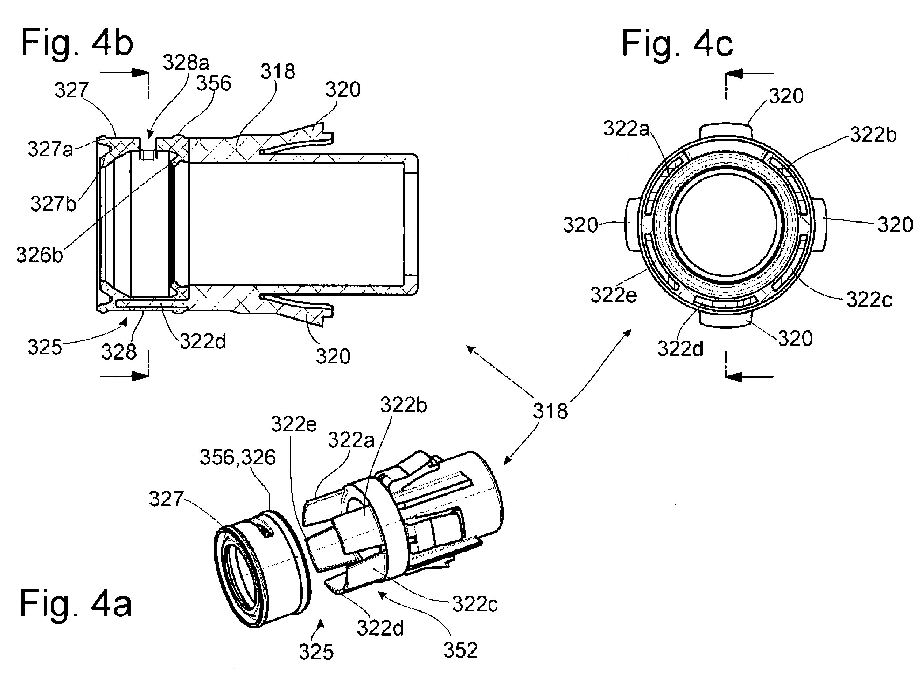

Alternativ zu dem mit den Fig. 3a-c dargestellten, an die Führungshülse 218 angespritzten Dichtungspaket 225 kann dieses auch vorab separat hergestellt und an der Führungshülse 318, genauer dem dort ausgeführten Abstandselement 352 angeordnet werden, wie in den Fig.4a-c gezeigt. Die Axialvorsprünge 322a-d zur Bildung des Abstandselementes 352 sind in diesem Fall wiederum wie bereits vorstehend beschrieben mit Zwischenräumen ausgebildet, wobei jedoch Ausnehmungen 223 (Fig. 3a-c) innerhalb der Axialvorsprünge 322a-d hierbei nicht ausgeführt sind. An dem Dichtungspaket 325 sind zu den Axialvorsprüngen 322a-e korrespondierende, in der Fig. 4a verdeckte Taschen ausgebildet, in welche beim Aufschieben des Dichtungspakets 325 die Axialvorsprünge 322a-e eingreifen. Die Fig. 4b,c zeigen dazu ergänzend einen Axial- und einen Radialschnitt, wobei gleiche oder gleichwirkende Teile mit einer gegenüber den Fig. 3a-c an der ersten Stelle von "2" auf "3" geänderte Bezugsziffer tragen.

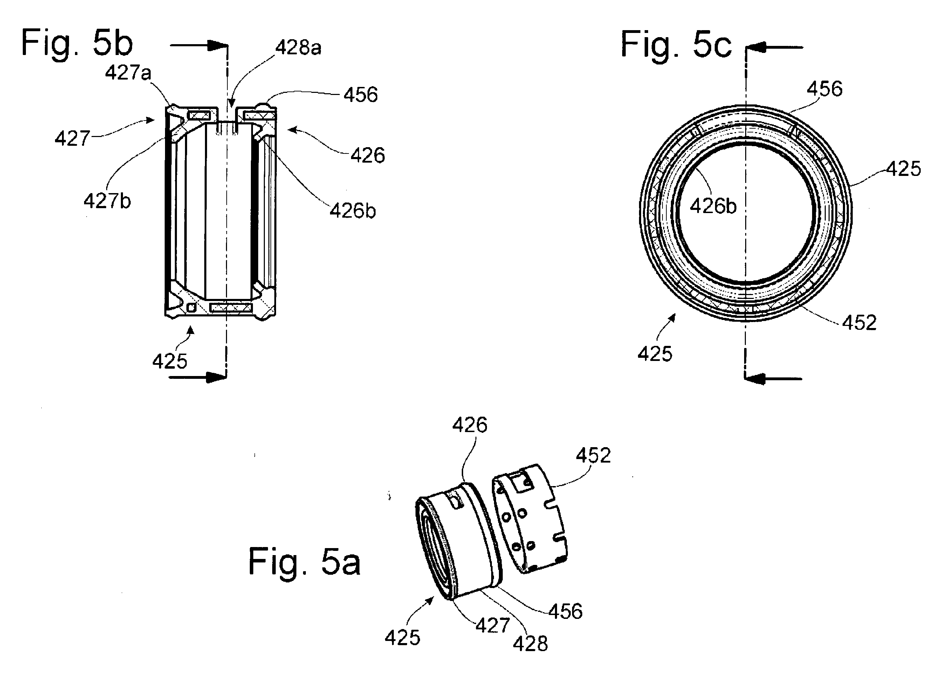

In Fig. 5a-c ist als weitere Variante eines Dichtungspakets 325 ein von der Führungshülse separat gefertigtes, ringförmiges Abstandselement 452 dargestellt, welches zur Bildung einer Primär- 327 und einer Sekundärdichtung 426 von einem Elastomermaterial umspritzt ist. Die Bezugsziffern der weiteren, zu den Fig. 3,4 gleichen bzw. gleichwirkenden Teile wurden in der ersten Stelle in "4" geändert. Es ergibt sich durch diese Bauweise der Vorteil, dass für verschiedene Typen von Druckmittelzylindern das gleiche Dichtungspaket verwendet werden kann, wohingegen das Gehäuse und die Führungshülse an den jeweiligen Anwendungsfall angepasst werden können. Zu einem Einbau dieses Abstandselementes in den Geberzylinder gemäß Fig. 2 ist dort lediglich die Führungshülse 118 im Bereich der Sekundärdichtung 126 zu modifizieren.

## Patentansprüche

1. Druckmittelzylinder (10) für ein hydraulisches Betätigungssystem eines Kraftfahrzeuges umfassend
- ein Gehäuse (12) mit einem Innenzylinder (14a) und mit einem Druckanschluss (16),
- eine mit dem Gehäuse (12) fest verbundene Führungshülse (18), die mit dem Innenzylinder (14a) des Gehäuses (12) eine gemeinsame Laufbuchse ausbildet,
- einen in der Laufbuchse verschiebbar angeordneten Kolben (22), der einen variablen Druckraum (24) begrenzt,
- eine gehäusefeste erste Dichtung (26), die mit dem Kolben (24) und mit dem Gehäuse (12) oder mit einem mit dem Gehäuse (12) fest verbundenen Bauteil (18) zusammenwirkt,
**dadurch gekennzeichnet,**
**dass** die erste Dichtung (26) stoffschlüssig mit der Führungshülse (18) ausgeführt ist.

2. Druckmittelzylinder (110) nach dem Oberbegriff von Patentanspruch 1, wobei dieser eine zwischen dem Kolben (122) und dem Gehäuse (112) wirkende zweite gehäusefeste Dichtung (127) umfasst, die von der ersten Dichtung (126) durch ein Abstandselement (152) axial beabstandet angeordnet ist ,
**dadurch gekennzeichnet,**
**dass** das Abstandselement (252) als Bestandteil der Führungshülse (218) ausgeführt ist.

3. Druckmittelzylinder nach Anspruch 2,
**dadurch gekennzeichnet,**
**dass** das Abstandselement einen Führungsabschnitt für den Kolben aufweist.

4. Druckmittelzylinder nach Anspruch 2 oder 3,
**dadurch gekennzeichnet,**
**dass** zumindest eine der Dichtungen (226; 227) stoffschlüssig mit der Führungshülse ausgeführt ist.

5. Druckmittelzylinder nach Anspruch 2, oder 3,
**dadurch gekennzeichnet,**
**dass** die erste (326) und die zweite Dichtung (327) als gemeinsamer Verbund (325) zur Montage an der Führungshülse (318) ausgeführt sind.

6. Druckmittelzylinder nach einem der vorhergehenden Ansprüche, wobei dieser eine zwischen dem Gehäuse (112) und der Führungshülse (118) angeordnete dritte gehäusefeste Dichtung (156) aufweist,
**dadurch gekennzeichnet,**
**dass** die dritte Dichtung (356) stoffschlüssig mit der Führungshülse (318) ausgeführt ist.

7. Druckmittelzylinder nach einem der vorhergehenden Ansprüche ,
**dadurch gekennzeichnet,**
**dass** die dritte Dichtung (356) in Baueinheit mit der ersten Dichtung (326) ausgeführt ist.

## Claims

1. Pressure medium cylinder (10) for a hydraulic actuating system of a motor vehicle, comprising
- a housing (12) with an inner cylinder (14a) and with a pressure connection (16),
- a guide sleeve (18) which is fixedly connected to the housing (12) and which together with the inner cylinder (14a) of the housing (12) forms a common cylinder liner,
- a piston (22) which is movably arranged in the cylinder liner and which delimits a variable pressure chamber (24),
- a first seal (26) which is fixed with respect to the housing and which interacts with the piston (24) and with the housing (12) or with a component (18) fixedly connected to the housing (12),
**characterized**
**in that** the first seal (26) is formed materially integrally with the guide sleeve (18).

2. Pressure medium cylinder (110) according to the preamble of Patent Claim 1, said pressure medium cylinder comprising a second seal (127) which is fixed with respect to the housing and which acts between the piston (122) and the housing (112) and which is arranged axially spaced apart from the first seal (126) by a spacer element (152),
**characterized**
**in that** the spacer element (252) is formed as a constituent part of the guide sleeve (218).

3. Pressure medium cylinder according to Claim 2,
**characterized**
**in that** the spacer element has a guide section for the piston.

4. Pressure medium cylinder according to Claim 2 or 3,
**characterized**
**in that** at least one of the seals (226; 227) is formed materially integrally with the guide sleeve.

5. Pressure medium cylinder according to Claim 2 or 3,
**characterized**
**in that** the first (326) and the second seal (327) are formed as a conjoint assembly (325) for mounting on the guide sleeve (318).

6. Pressure medium cylinder according to one of the preceding claims, said pressure medium cylinder having a third seal (156) which is fixed with respect to the housing and which is arranged between the housing (112) and the guide sleeve (118),
**characterized**
**in that** the third seal (356) is formed materially integrally with the guide sleeve (318).

7. Pressure medium cylinder according to one of the preceding claims,
**characterized**
**in that** the third seal (356) is formed as a structural unit with the first seal (326).

## Revendications

1. Cylindre de fluide sous pression (10) pour un système de commande hydraulique d'un véhicule automobile, comprenant :
- un boîtier (12) avec un cylindre intérieur (14a) et un raccord de pression (16),
- une douille de guidage (18) connectée fixement au boîtier (12), qui constitue avec le cylindre intérieur (14a) du boîtier (12) une boîte de glissement commune,
- un piston (22) disposé de manière déplaçable dans la boîte de glissement, qui limite un espace de pression variable (24),
- un premier joint d'étanchéité (26) fixé au boîtier, qui coopère avec le piston (24) et avec le boîtier (12) ou avec un composant (18) connecté fixement au boîtier (12),
**caractérisé en ce que**
le premier joint d'étanchéité (26) est réalisé par liaison de matière avec la douille de guidage (18).

2. Cylindre de fluide sous pression (110) selon le préambule de la revendication 1, dans lequel celui-ci comprend un deuxième joint d'étanchéité (127) fixé au boîtier et agissant entre le piston (122) et le boîtier (112), qui est disposé de manière espacée axialement du premier joint d'étanchéité (126) par un élément d'espacement (152),
**caractérisé en ce que**
l'élément d'espacement (252) est réalisé sous forme de constituant de la douille de guidage (218) .

3. Cylindre de fluide sous pression selon la revendication 2,
**caractérisé en ce que**
l'élément d'espacement présente une portion de guidage pour le piston.

4. Cylindre de fluide sous pression selon la revendication 2 ou 3,
**caractérisé en ce**
**qu'**au moins l'un des joints d'étanchéité (226 ; 227) est réalisé par liaison de matière avec la douille de guidage.

5. Cylindre de fluide sous pression selon la revendication 2 ou 3,
**caractérisé en ce que**
le premier (326) et le deuxième (327) joint d'étanchéité sont réalisés sous forme d'assemblage commun (325) pour le montage sur la douille de guidage (318).

6. Cylindre de fluide sous pression selon l'une quelconque des revendications précédentes, dans lequel celui-ci présente un troisième joint d'étanchéité (156) fixé au boîtier et disposé entre le boîtier (112) et la douille de guidage (118),
**caractérisé en ce que**
le troisième joint d'étanchéité (356) est réalisé par liaison de matière avec la douille de guidage (318) .

7. Cylindre de fluide sous pression selon l'une quelconque des revendications précédentes,
**caractérisé en ce que**
le troisième joint d'étanchéité (356) est réalisé sous forme d'unité constructive avec le premier joint d'étanchéité (326).
